# EUROPÄISCHE PATENTANMELDUNG

(11) **EP 2 664 810 A2**
(43) Veröffentlichungstag der Anmeldung: **20.11.2013**
(21) Anmeldenummer: 13164900.6
(22) Anmeldetag: 23.04.2013
(51) Int. Cl.: F16C 33/78, F16C 19/36, F16C 19/54

(54) **Lagereinheit für landwirtschaftliche Werkzeuge sowie eine Anordnung mit einem landwirtschaftlichen Werkzeug und der Lagereinheit**

(30) Priorität: 14.05.2012 DE 102012208011
(71) Anmelder: Schaeffler Technologies AG & Co. KG, 91074 Herzogenaurach (DE)
(72) Erfinder: Fleischer, Michael, 91187 Mühlstetten (DE)

(57) **Zusammenfassung**

Der Erfindung liegt die Aufgabe zugrunde, eine Lagereinheit für landwirtschaftliche Werkzeuge vorzuschlagen, welches kostengünstig und bauraumoptimiert herzustellen ist.

Es wird eine Lagereinheit 1 für landwirtschaftliche Werkzeuge 2 vorgeschlagen, mit einem Gehäuseabschnitt 4 und einer Hohlwelle 5, welche koaxial zu einer Drehachse D angeordnet sind, mit zwei Wälzlagern 6, welche jeweils einen Außenring aufweisen, wobei die zwei Wälzlager 6 in einem Aufnahmeraum angeordnet und dazu ausgebildet sind, den Gehäuseabschnitt 4 und die Hohlwelle 5 relativ zueinander drehbar um die Drehachse D zu lagern, mit zwei Deckscheiben 15, welche den Aufnahmeraum beidseitig abschließen, mit einem Sicherungselement 18, welches die Außenringe der zwei Wälzlager 6 voneinander beabstandet, wobei das Sicherungselement 18 eine Mittelebene E definiert, welche senkrecht zur Drehachse D verläuft, und wobei die zwei Deckscheiben 15 als Gleichteile ausgebildet und im gleichen Abstand zu der Mittelebene E angeordnet sind.

## Beschreibung

Die Erfindung betrifft eine Lagereinheit für landwirtschaftliche Werkzeuge mit einem Gehäuseabschnitt und einer Hohlwelle, welche koaxial zu einer Drehachse angeordnet sind, mit zwei Wälzlagern, welche jeweils einen Außenring aufweisen, wobei die zwei Wälzlager in einem Aufnahmeraum angeordnet und dazu ausgebildet sind, den Gehäuseabschnitt und die Hohlwelle relativ zueinander drehbar um die Drehachse zu lagern, mit zwei Deckscheiben, welche den Aufnahmeraum beidseitig abschließen.

Lagersysteme dienen u. a. zur Lagerung von Maschinenteilen landwirtschaftlicher Geräte. Beispiele für Maschinenteile sind Pflugscheiben für Pflugmaschinen oder Saatscheiben für Sämaschinen. Da die Maschinenteile oftmals Bodenbearbeitungen durchführen oder zumindest in Bodennähe arbeiten, sind die Lagersysteme zum einen Stoßbelastungen, zum anderen Einflüssen wie z. B. Staub, Feuchtigkeit oder Sand ausgesetzt.

Die WO 2007/093534 A1, die wohl den nächstkommenden Stand der Technik darstellt, beschreibt ein rotierendes, scheibenförmiges, landwirtschaftliches Werkzeug, das in einem Rahmen einer Maschine über eine Nabe und eine Lageranordnung gelagert ist. Die Lageranordnung weist einen Stützring und hierauf zwei gegeneinander in O-Anordnung angestellte Schrägrollenlager auf, wobei die Schrägrollenlager durch zwei Dichtelemente abgedichtet sind. Den Dichtelementen sind zwei Spaltdichtungen vorgeschaltet, welche beidseitig an der Stirnseite des Stützrings angeordnet sind.

### Gebiet der Erfindung

Der Erfindung liegt die Aufgabe zugrunde, eine Lagereinheit für landwirtschaftliche Werkzeuge vorzuschlagen, welche kostengünstig und bauraumoptimiert herzustellen ist.

Diese Aufgabe wird durch eine Lagereinheit mit den Merkmalen des Anspruchs 1 sowie durch ein landwirtschaftliches Werkzeug mit den Merkmalen des Anspruchs 9 gelöst. Bevorzugte oder vorteilhafte Ausführungen der Erfindung ergeben sich aus den Unteransprüchen, der nachfolgenden Beschreibung sowie den beigefügten Figuren.

Die Erfindung betrifft eine Lagereinheit für landwirtschaftliche Werkzeuge. Die Lagereinheit dient zur Lagerung der landwirtschaftlichen Werkzeuge an einem landwirtschaftlichen Gerät. Bei den landwirtschaftlichen Werkzeugen handelt es sich beispielsweise um landwirtschaftliche Bodenbearbeitungswerkzeuge, insbesondere um eine Pflugscheibe für eine Pflugmaschine oder eine Saatscheibe für eine Sämaschine.

Die Lagereinheit weist einen Gehäuseabschnitt und eine Hohlwelle auf, welche koaxial zu einer Drehachse angeordnet sind. Der Gehäuseabschnitt weist einen Durchführungsbereich zum Durchführen der Hohlwelle auf, so dass die Hohlwelle von dem Gehäuseabschnitt zumindest teilweise entlang der Drehachse umschlossen ist.

Die Lagereinheit umfasst zwei Wälzlager, welche jeweils einen Außenring aufweisen. Die zwei Wälzlager sind in einem Aufnahmeraum angeordnet und dazu ausgebildet, den Gehäuseabschnitt und die Hohlwelle relativ zueinander drehbar um die Drehachse zu lagern. Die zwei Wälzlager sind somit zwischen dem Gehäuseabschnitt und der Hohlwelle angeordnet. Insbesondere sind die zwei Wälzlager koaxial zur Drehachse des Gehäuseabschnitts und der Hohlwelle angeordnet.
Die Lagereinheit weist zwei Deckscheiben auf, welche den Aufnahmeraum beidseitig abschließen. Vorzugsweise sind die zwei Deckscheiben an zwei sich gegenüber liegenden Stirnflächen der Lagereinheit angeordnet, wobei sich die Deckscheiben zumindest abschnittsweise radial zur Drehachse erstrecken. Insbesondere schließen die Deckscheiben jeweils eine sich zwischen der Hohlwelle und dem Gehäuseabschnitt radial erstreckende Eingangsöffnung ab. Auf diese Weise kann das Eindringen von Verunreinigungen und Feuchtigkeit in die Lagereinheit vermieden werden. Die Deckscheiben sind z. B. mittels eines Tiefziehverfahrens gefertigt.

Im Rahmen der Erfindung wird vorgeschlagen, dass die Lagereinheit ein Sicherungselement umfasst, welches die Außenringe der zwei Wälzlager voneinander beabstandet. Insbesondere liegen die Außenringe kontaktierend und/oder unmittelbar an dem Sicherungselement an. Das Sicherungselement definiert eine Mittelebene, welche senkrecht zur Drehachse verläuft. Insbesondere ist die Mittelebene mittig zu der axialen Längserstreckung des Gehäuseabschnitts und/oder der Hohlwelle angeordnet, wobei die axiale Längserstreckung parallel zur Drehachse verläuft. Des Weiteren wird vorgeschlagen, dass die zwei Deckscheiben als Gleichteile ausgebildet und im gleichen Abstand zu der Mittelebene angeordnet sind. Insbesondere sind die Deckscheiben spiegelsymmetrisch zu der Mittelebene angeordnet. Unter den Gleichteilen sind Bauteile zu verstehen, welche die gleiche Bauform und Baugröße aufweisen. Das Gleichteil kann als ein einteiliges oder mehrteiliges Bauteil ausgebildet sein.

Von dem Sicherungselement zu den zwei Deckscheiben in axialer Richtung parallel zur Drehachse betrachtend sind zwei Bauräume gebildet, welche aufgrund des gleichen Abstands der Deckscheiben zu der Mittelebene die gleiche Bauraumlänge aufweisen. Die gleiche Bauraumlänge bildet eine vereinfachte Konstruktion der Lagereinheit und setzt auf diese Weise eine bauraumoptimierte, insbesondere kompakte Anordnung von Bauteilen in der Lagereinheit um. Des Weiteren sind die Herstellungs- und Werkzeugkosten der Deckscheiben aufgrund der gleichteiligen Ausbildung reduziert. Das Sicherungselement ermöglicht vorteilhafterweise die Außenringe und folglich die Wälzlager auf einfache und zugleich präzise Weise in axialer Richtung voneinander zu beabstanden.

Die Wälzlager ermöglichen einen Betrieb der Lagereinheit sowohl mit rotierender, insbesondere angetriebener Hohlwelle, als auch mit rotierendem, insbesondere angetriebenem Gehäuseabschnitt. Somit ist eine Anordnung des landwirtschaftlichen Werkzeugs, welches eine Rotierbewegung am landwirtschaftlichen Werkzeug durchführt, sowohl an der Hohlwelle, als auch an dem Gehäuseabschnitt der Lagereinheit möglich. Z. B. ist der Gehäuseabschnitt als ein Flansch mit einer Mehrzahl an in Umlaufrichtung voneinander beabstandeten Aufnahmebohrungen ausgebildet, an dem das landwirtschaftliche Werkzeug angeflanscht werden kann. Für die Anordnung des landwirtschaftlichen Werkzeugs an der Hohlwelle weist diese vorzugsweise eine Durchgangsbohrung oder Sackbohrung auf, durch diese z. B. eine Schraube durchgeführt ist, welche die Hohlwelle mit den landwirtschaftlichen Werkzeug drehfest verbindet.

Die Lagereinheit ist vorzugsweise über die Hohlwelle oder über den Gehäuseabschnitt mit dem landwirtschaftlichen Gerät verbindbar, wobei die Verbindung in analoger Weise zu der zuvor beschriebenen Anordnung des landwirtschaftlichen Werkzeugs an der Hohlwelle bzw. an dem Gehäuseabschnitt erfolgen kann. Auf diese Weise sind das landwirtschaftliche Werkzeug mit der Hohlwelle und das landwirtschaftliche Gerät mit dem Gehäuseabschnitt oder vice versa lösbar und/oder unlösbar miteinander verbunden. Das landwirtschaftliche Gerät ist z.B. als ein Traktor mit einer Antriebswelle für das landwirtschaftliche Werkzeug ausgebildet.

In einer bevorzugten Ausführungsform ist das Sicherungselement als ein Sicherungsring ausgebildet, wobei der Gehäuseabschnitt in der Mittelebene eine umlaufende Nut umfasst, in der der Sicherungsring zumindest abschnittsweise angeordnet ist. Insbesondere erstreckt sich die umlaufende Nut radial zur Drehachse. Die umlaufende Nut bildet eine verliersichere Halterung des Sicherungsrings im Gehäuseabschnitt, so dass die Beabstandung der Außenringe und folglich der Wälzlager in axialer Richtung sichergestellt ist.

In einer weiteren bevorzugten Ausführungsform sind die Wälzlager als Gleichteile ausgebildet und im gleichen Abstand zu der Mittelebene angeordnet. Insbesondere sind die Wälzlager spiegelsymmetrisch zur Mittelebene angeordnet. Die Anordnung der Wälzlager im gleichen Abstand wird durch das Sicherungselement erzielt, welches die Außenringe der Wälzlager zumindest abschnittsweise axial kontaktieren. Der Abstand der Wälzlager zueinander wird hierbei durch die axiale Breite des Sicherungselements bestimmt. Somit positioniert das Sicherungselement die zwei Wälzlager derart, wie es entsprechend der Bauraumverhältnisse und der auftretenden Kräfte in der Lagereinheit optimal ist. Insbesondere können aufwendige Prozessschritte, wie z. B. das Umformverfahren des Gehäuseabschnitts für die Beabstandung der Wälzlager, wie es in dem nächstkommenden Stand der Technik WO 2007/093534 A1 gezeigt ist, durch das Sicherungselement vermieden und folglich Fertigungskosten der Lagereinheit reduziert werden.

Die gleichteilige Ausbildung der Wälzlager führt eine kostengünstige Bauweise der Lagereinheit aus. Des Weiteren erlauben die Wälzlager und die Deckscheiben als Gleichteile eine Umkehrung des Gehäuseabschnitts um 180° zur Längserstreckung der Drehachse. D. h., dass der Gehäuseabschnitt entlang der Drehachse in beide axiale Richtungen zur Hohlwelle montierbar ist, ohne dass an der Lagereinheit Änderungen vorgenommen werden müssen. Folglich kann die Lagereinheit individuell nach den Bauart- und Kopplungsbedingungen des landwirtschaftlichen Geräts und Werkzeugs ausgerichtet werden. Auf diese Weise ist eine einbaufertige Lagereinheit bereitgestellt, bei der ein Einsatz für unterschiedliche landwirtschaftliche Werkzeuge kostengünstig und ohne weitere Umbaumaßnahmen umgesetzt ist.

Besonders bevorzugt sind die Wälzlager als Kegelrollenlager ausgebildet, welche in der Lagereinheit in O-Anordnung zueinander angestellt sind. Kegelrollenlager zeichnen sich zum einen durch eine präzise Lagerung aus. Zum anderen weisen die Kegelrollenlager in O-Anordnung eine hohe Kippsteifigkeit auf, so dass die Lagereinheit widerstandsfähig gegen Kippmomente ausgebildet ist. Zudem nehmen Kegelrollen hohe radiale und jeweils einseitig axiale Belastungen auf und eignen sich somit insbesondere für landwirtschaftliche Geräte wie z. B. eine Pflugmaschine. Insbesondere bei einer zur Mittelebene spiegelsymmetrischen Anordnung der Kegelrollenlager nehmen diese gleichmäßig die axial einwirkenden Belastungen auf. Vorzugsweise sind die Ringe der Kegelrollenlager spanlos gefertigt.

Vom konstruktiven Aufbau ist bevorzugt, dass die Lagereinheit zwei Dichtungen aufweist, welche in axialer Richtung jeweils zwischen einer der zwei Deckscheiben und dem benachbarten Wälzlager angeordnet sind, wobei die Dichtungen als Gleichteile ausgebildet und im gleichen Abstand zur Mittelebene angeordnet sind. Insbesondere sind die Dichtungen spiegelsymmetrisch zur Mittelebene angeordnet. Vorzugsweise sind die Dichtungen als zwei- oder dreilippige Wellendichtringe oder als Kassettendichtungen ausgebildet. Die Dichtungen ermöglichen die Lagereinheit zuverlässig gegen Umwelteinflüsse abzudichten. Des Weiteren sind die Herstellungskosten der Lagereinheit aufgrund der als Gleichteile ausgebildeten Dichtungen gesenkt. Zudem ermöglicht die gleichteilige Ausbildung der Dichtungen gemeinsam mit den Deckscheiben und den Wälzlagern als Gleichteile eine Umkehr des Gehäuseabschnitts um 180° zu der Längserstreckung der Drehachse. Auf diese Weise ist der Gehäuseabschnitt entlang der Drehachse in beide axiale Richtungen zur Hohlwelle montierbar, ohne dass an der Lagereinheit Änderungen vorgenommen werden müssen. Dadurch wird die Möglichkeit erschlossen, aus den gleichen Bauteilen Lagereinheiten zu schaffen, die sich in der Einbaugeometrie deutlich unterscheiden.

In einer bevorzugten Ausführungsform weist die Hohlwelle drei Wellenabschnitte auf, wobei der erste Wellenabschnitt einen größeren Durchmesser als der zweite Wellenabschnitt und der zweite Wellenabschnitt einen größeren Durchmesser als der dritte Wellenabschnitt aufweist, wobei der erste Wellenabschnitt als Auflagefläche für eine der zwei Deckscheiben, der zweite Wellenabschnitt als Auflagefläche für jeweils einen Innenring der Wälzlager und der dritte Wellenabschnitt als Auflagefläche für einen Haltering ausgebildet ist, wobei der Haltering als Auflagefläche für die zweite der zwei Deckscheiben ausgebildet ist. Insbesondere entspricht der Außendurchmesser des dritten Wellenabschnitts dem Innendurchmesser des Halterings. Insbesondere weisen der Haltering und der erste Wellenabschnitt den gleichen Außendurchmesser auf, so dass die Deckscheiben als Gleichteile angeordnet werden können. Durch den größer als den zweiten Wellenabschnitt ausgebildeten ersten Wellenabschnitt liegt ein erster Begrenzungsbereich vor, welcher als Anlageschulter ein Verrutschen des angrenzenden Wälzlagers in die axiale Richtung, zum ersten Begrenzungsbereich gerichtet, verhindert. Vorzugsweise werden die zwei Dichtungen ebenfalls auf dem Haltering bzw. auf dem ersten Wellenabschnitt angeordnet. Insbesondere ermöglichen die drei Wellenabschnitte und der Haltering die Wälzlager, die Deckscheiben und die Dichtungen jeweils spiegelsymmetrisch zu Mittelebene anzuordnen.

Die Abstufung der Hohlwelle in den drei Wellenabschnitten ermöglicht auf einfache Weise den Zusammenbau der Lagereinheit. Z. B. wird eines der zwei Wälzlager zwischen dem Gehäuseabschnitt und der Hohlwelle auf den zweiten Wellenabschnitt angrenzend zum ersten Begrenzungsbereich angebracht. Daraufhin kann das Sicherungselement und anschließend das Wälzlager in dem zweiten Wellenabschnitt angeordnet werden. In Folge darauf können das Halteelement und der dritte Wellenabschnitt beispielsweise über ein Schrumpfverfahren fest miteinander verbunden werden. In einem letzten Schritt können die Dichtungen und die Deckscheiben in der Lagereinheit angeordnet werden.

In einer weiteren bevorzugten Ausführungsform weist der zweite Wellenabschnitt einen sich radial zur Drehachse erstreckenden zweiten Begrenzungsbereich auf. Der zweite Begrenzungsbereich verhindert ein Verrutschen des angrenzenden Wälzlagers in dessen axiale Richtung. Insbesondere handelt es sich bei dem zweiten Begrenzungsbereich um einen umgebördelten Begrenzungsbereich. Das Umbördeln erfolgt vorzugsweise nach der Anordnung der Wälzlager auf dem zweiten Wellenabschnitt und dem Sicherungselement in dem Gehäuseabschnitt. Auf diese Weise sind die Wälzlager formschlüssig fixiert, so dass ein axiales Verrutschen verhindert ist. Insbesondere sind die zwei Wälzlager durch den umgebördelten Begrenzungsbereich vorgespannt. Alternativ zum dem umgebördelten Begrenzungsbereich kann die Vorspannung mittels des Halterings erzielt werden, indem dieser nach Anordnung auf dem dritten Wellenabschnitt mit dem benachbarten Wälzkörper im Kontakt steht und somit als der zweite Begrenzungsbereich fungiert.

In einer weiteren bevorzugten Ausführungsform weist der Gehäuseabschnitt auf seiner radial nach außen gewandten Seite Ausnehmungen auf, welche koaxial zur Hohlwelle und parallel zur Drehachse verlaufen, wobei die Deckscheiben zumindest abschnittsweise parallel zu den Ausnehmungen verlaufen. Die Ausnehmungen bilden eine zur Drehachse radiale Zylinderaußenfläche des Gehäuseabschnitts und die Deckscheiben im radialen Außenbereich eine Zylinderinnenfläche, wobei die Zylinderaußenflächen und die Zylinderinnenflächen zumindest abschnittsweise koaxial und konzentrisch zueinander verlaufen. Die Deckscheiben bilden vorteilhafterweise gemeinsam mit den Ausnehmungen eine Labyrinthdichtung oder einen Abschnitt davon, so dass selbst bei einer stark verschmutzten Umgebung eine zuverlässige Dichtwirkung erzielt wird. Für die Labyrinthdichtung sind die Zylinderinnenflächen der Deckscheiben mit den zylinderaußenflächen der Ausnehmungen in einem Spalt zueinander angeordnet. Die Spaltbreite liegt mindestens unter 3 mm, vorzugsweise unter 2 mm, insbesondere unter 1 mm. Insbesondere sind die Ausnehmungen gleich ausgebildet und im gleichen Abstand zu der Mittelebene angeordnet, so dass die Deckscheiben als Gleichteile ausgebildet sein können. Vorzugsweise sind die Ausnehmungen als Ausdrehungen ausgebildet. Vorzugsweise sind die Ausnehmungen jeweils im stirnseitigen Endbereich des Gehäuseabschnitts angeordnet.

Einen weiteren Gegenstand der Erfindung betrifft eine Anordnung mit einem landwirtschaftlichen Werkzeug und mit einer Lagereinheit nach der vorhergehenden Beschreibung. Bei dem landwirtschaftlichen Werkzeug handelt es sich z. B. um eine Saatscheibe für eine Sämaschine, eine Pflugscheibe für eine Pflugmaschine, um ein landwirtschaftliches Werkzeug für einen Ackerschlepper, Heuwender, Häcksler, Mähdrescher oder für ein sonstiges landwirtschaftliches Gerät. Das landwirtschaftliche Werkzeug kann mit dem Gehäuseabschnitt oder mit der Hohlwelle fest verbunden sein. Z. B. ist das landwirtschaftliche Werkzeug mit dem Gehäuseabschnitt oder mit der Hohlwelle mittels mindestens einer Schraube oder einem Gewindezapfen kraftschlüssig verbunden.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: im Querschnitt eine Lagereinheit als ein erstes Ausführungsbeispiel der Erfindung;
- Figur 2: im Querschnitt die Lagereinheit als ein zweites Ausführungsbeispiel der Erfindung;
- Figur 3: im Querschnitt die Lagereinheit aus Figur 2 mit einem umgekehrten Gehäuseabschnitt.

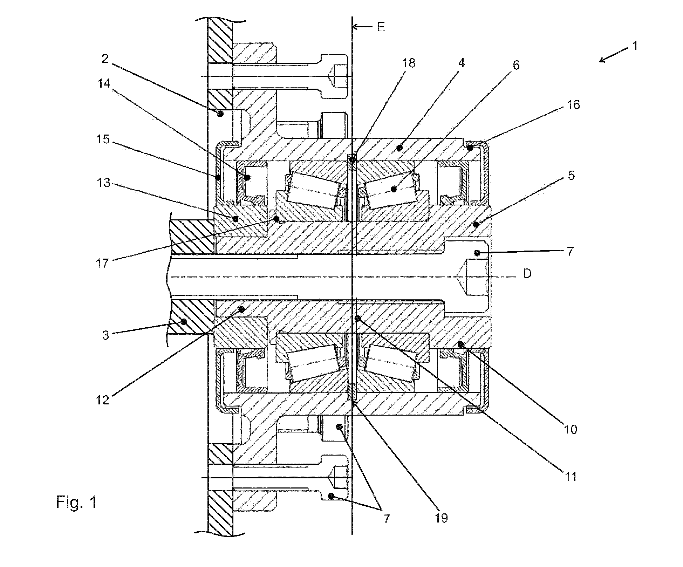

Die Figur 1 zeigt im Querschnitt eine Lagereinheit 1 für das Lagern eines landwirtschaftlichen Werkzeugs 2 an einem landwirtschaftlichen Gerät 3. Bei dem landwirtschaftlichen Werkzeug 2 handelt es sich z. B. um eine Saatscheibe für eine Sämaschine oder um ein anderes rotierendes Werkzeug. Die Lagereinheit 1 umfasst einen Gehäuseabschnitt 4, welcher als Flansch mit einer Mehrzahl an in Umlaufrichtung voneinander beabstandeten Aufnahmebohrungen ausgebildet ist, und eine Hohlwelle 5, wobei der Gehäuseabschnitt 4 und die Hohlwelle 5 koaxial zu einer Drehachse D angeordnet sind. Die Aufnahmebohrungen des Gehäuseabschnitts 4 können mit oder ohne Gewinde ausgeführt sein. Zwischen dem Gehäuseabschnitt 4 und der Hohlwelle 5 sind zwei Wälzlager 6 angeordnet, welche koaxial zur Drehachse angeordnet sind. Bei den Wälzlagern 6 handelt es sich um Kegelrollenlager, welche als Gleichteile ausgebildet und in O-Anordnung zueinander angestellt sind. Die Wälzlager 6 lagern den Gehäuseabschnitt 4 und die Hohlwelle 5 relativ zueinander drehbar um die Drehachse D.

An dem Gehäuseabschnitt 4 ist das landwirtschaftliche Werkzeug 2 angeordnet, welche mittels Schrauben 7 lösbar miteinander verbunden werden können. Die Schraubverbindung ermöglicht auf schnelle und einfache Weise das Anbringen und den Austausch des landwirtschaftlichen Werkzeugs 2 an die Lagereinheit 1. Alternativ ist möglich, den Gehäuseabschnitt 4 und das landwirtschaftliche Werkzeug 2 über eine Niet-, Schweiß-, Kleb-, Lötverbindung oder sonstige Verbindung fest miteinander zu verbinden. Das landwirtschaftliche Gerät 3 ist mit der Hohlwelle 5 fest verbunden. Hierzu weist die Hohlwelle 5 eine Durchgangsbohrung mit einem Innengewinde auf, so dass das landwirtschaftliche Gerät 3 und die Hohlwelle über eine Schraubverbindung lösbar miteinander verbunden sind. Ebenso ist es möglich, die Hohlwelle 5 ohne ein Innengewinde auszustatten. Alternativ zur Schraubverbindung kann das landwirtschaftliche Gerät mittels einer Niet-, Schweiß- oder Lötverbindung mit der Hohlwelle 5 verbunden sein. Durch die feste Verbindung des Gehäuseabschnitts 4 mit dem landwirtschaftlichen Werkzeug 2 und der Hohlwelle 5 mit dem landwirtschaftlichen Gerät 3 ist das landwirtschaftliche Werkzeug 2 drehbar zu dem landwirtschaftlichen Gerät 3 gelagert. Als eine alternative Ausführungsform ist es möglich, dass an dem Gehäuseabschnitt 4 das landwirtschaftliche Gerät 3 und an der Hohlwelle 5 das landwirtschaftliche Werkzeug 2 angeordnet ist.

Die Hohlwelle 5 umfasst drei Wellenabschnitte 10, 11, 12, wobei der erste Wellenabschnitt 10 einen größeren Durchmesser als der zweite Wellenabschnitt 11 und der zweite Wellenabschnitt 11 einen größeren Durchmesser als der dritte Wellenabschnitt 12 aufweist. Die Abstufung der drei Wellenabschnitte 10, 11, 12 ermöglicht die zwei Wälzlager 6 über den dritten Wellenabschnitt 12 durchzuführen und an dem zweiten Wellenabschnitt 11 die zwei Wälzlager 6 anzuordnen. Der erste Wellenabschnitt 10 dient als Anlageschulter des angrenzenden Wälzlagers 6, so dass dieses Wälzlager 6 in axialer Richtung zum ersten Wellenabschnitt 10 gerichtet nicht verrutschen kann. Die drei Wellenabschnitte 10, 11, 12 der Hohlwelle 5 bilden gemeinsam mit der Zylinderinnenfläche des Gehäuseabschnitts 4 einen Aufnahmeraum.

Die Lagereinheit 1 weist zwei Wellendichtringe 14 als Dichtungen auf, welche eine Zylinderinnenfläche des Gehäuseabschnitts 4 und den ersten Wellenabschnitt 10 bzw. einen Haltering 13 kontaktieren, wobei der Haltering 13 an dem dritten Wellenabschnitt 12 angeordnet ist. Der dritte Wellenabschnitt 10 und der Haltering 13 sind in radialer Richtung formschlüssig miteinander verbunden. Die Wellendichtringe 14 verhindern das Eindringen von Verschmutzungen und Feuchtigkeit und sichern somit einen wartungs- und störungsfreien Betrieb der Lagereinheit 1. Den Wellendichtringen 14 ist jeweils eine Deckscheibe 15 vorgeschaltet, welche eine stirnflächige, zwischen dem Gehäuseabschnitt 4 und der Hohlwelle 5 gebildete Eingangsöffnung der Lagereinheit abschließt. Die Deckscheiben 15 sind jeweils als eine Labyrinthdichtung ausgebildet und mit einem radialen Innenbereich mit dem ersten Wellenabschnitt 10 bzw. dem Haltering 13 fest verbunden und verlaufen mit einem radialen Außenbereich parallel zu einer Zylinderaußenfläche des Gehäuseabschnitts 4 in dessen stirnseitigem Endbereich. Für die Labyrinthdichtung weist der Gehäuseabschnitt 4 an den stirnseitigen Endbereichen zwei Ausdrehungen 16 als Ausnehmungen auf, welche parallel zur Hohlwelle 5 verlaufen und an denen jeweils der radiale Außenbereich der Deckscheibe 14 parallel verläuft. Der Haltering 13 und der erste Wellenabschnitt 10 weisen den gleichen Außendurchmesser auf, so dass die Wellendichtringe 14 und die Deckscheiben 15 jeweils als Gleichteile angeordnet sind.

Zwischen den zwei Wälzlagern 6 ist ein Sicherungselement 18 angeordnet, welches als ein die Drehachse D umlaufender Sicherungsring ausgebildet ist. Durch die axiale Breite des Sicherungselements 18 sind die Außenringe der Wälzlager 6 und somit die Wälzlager 6 voneinander in axialer Richtung beabstandet. Das Sicherungselement 18 ist in einer den Gehäuseabschnitt 4 innenseitig umlaufenden Nut 19 angeordnet.

Der zweite Wellenabschnitt 11 weist einen sich radial zur Drehachse D erstreckenden umgebördelten Begrenzungsbereich 17 auf, welcher z. B. nach dem Anordnen der zwei Wälzlager 6 in dem zweiten Wellenabschnitt 11 gefertigt ist. Der umgebördelte Begrenzungsbereich 17 spannt die zwei Wälzlager 6 zwischen der Anlageschulter und dem umgebördelten Begrenzungsbereich 17 vor.

Das Sicherungselement 18 definiert eine Mittelebene E, welche senkrecht zur Drehachse D verläuft. Zu dieser Mittelebene E sind die Wälzlager 6, die Wellendichtringe 14 und die Deckscheiben 15 jeweils im gleichen Abstand angeordnet. Zudem sind die Wälzlager 6, die Wellendichtringe 14 und die Deckscheiben 15 jeweils spiegelsymmetrisch zur Mittelebene E angeordnet. Der Gehäuseabschnitt 4 weist im Kontaktierungsbereich der Wälzlager 6, der Wellendichtringe 14 und der Deckscheiben 15 den gleichen Innendurchmesser auf. Der erste Wellenabschnitt 10 und der Haltering 13 weisen die gleiche axiale Länge auf. Die zwei Bauräume der zwei Wälzlager 6 des zweiten Wellenabschnitts 11 ausgehend von der Mittelebene E weisen die gleiche axiale Länge auf.

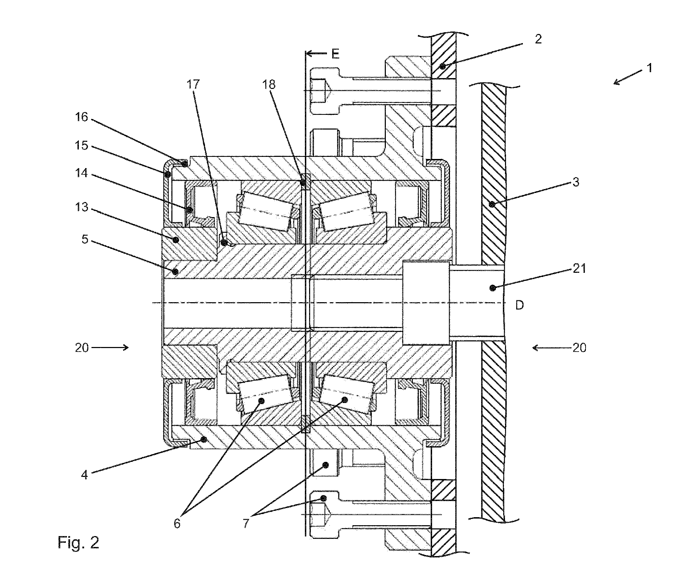

Der Gehäuseabschnitt 4 ist um 180° zur Längserstreckung der Drehachse D umkehrbar, wie es in Figur 1 und Figur 2 dargestellt ist. Ermöglicht wird dies durch die im gleichen Abstand zur Mittelebene E angeordneten Wälzlager 6, Wellendichtringe 14 und Deckscheiben 15, welche jeweils als Gleichteile ausgebildet sind. Dadurch kann das an dem Gehäuseabschnitt 4 angeordnete landwirtschaftliche Werkzeug 2 bzw. das landwirtschaftliche Gerät 3 beliebig an jeder der zwei Stirnseiten 20 der Lagereinheit 1 angeordnet werden. Dadurch ist es möglich, eine universelle und einbaufertige Lagereinheit 1 für verschiedene landwirtschaftliche Anwendungsbereiche bereitzustellen, ohne dass weitere Änderungs- oder Zusatzmaßnahmen an der Lagereinheit 1, dem landwirtschaftlichen Werkzeug 2 oder dem landwirtschaftlichen Gerät 3 ergriffen werden müssen.

Figur 2 zeigt die Lagereinheit 1 mit dem landwirtschaftlichen Werkzeug 2 angeordnet an dem Gehäuseabschnitt 4 und dem landwirtschaftlichen Gerät 3 angeordnet an einem Gewindezapfen 21, wobei der Gewindezapfen 21 ein Außengewinde für eine drehfeste Verbindung mit dem landwirtschaftlichen Gerät 3 umfasst. Der Gewindezapfen 21 ist mit der Hohlwelle 5 über die Durchgangsbohrung fest verbunden. Der Gewindezapfen 21 kann in beide axiale Richtungen der Drehachse angeordnet werden und ermöglicht auf diese Weise, dass das landwirtschaftliche Werkzeug 2 und das landwirtschaftliche Gerät 3 auf der gleichen Stirnseite oder an den gegenseitigen Stirnseiten 20 der Lagereinheit 1 angeordnet werden können.

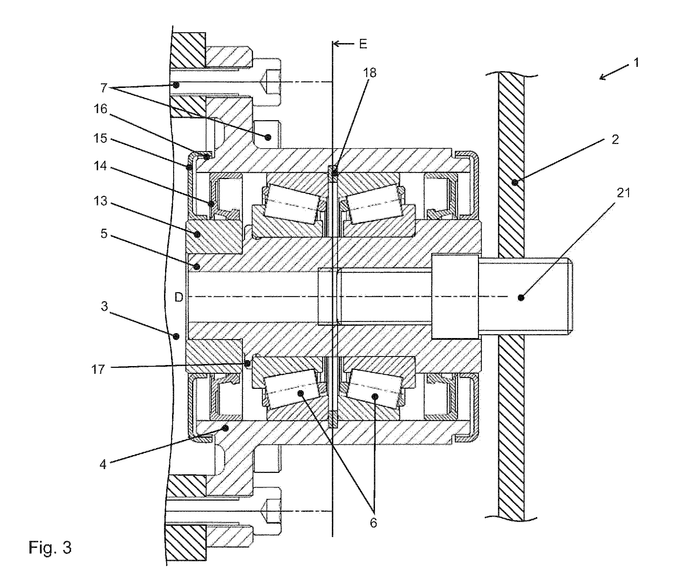

Figur 3 zeigt die Lagereinheit 1 aus Figur 2 mit dem Gehäuseabschnitt 4, welcher um 180° zur Längserstreckung der Drehachse D umgekehrt ist. Das landwirtschaftliche Werkzeug 2 ist mit dem Gewindebolzen 21 und das landwirtschaftliche Gerät 3 mit dem Gehäuseabschnitt 4 fest verbunden. Das landwirtschaftliche Werkzeug 2 kann z. B. über eine Mutter zusätzlich auf dem Gewindebolzen 21 gesichert sein. Das landwirtschaftliche Werkzeug 2 und das landwirtschaftliche Gerät 3 sind durch die umgekehrte Anordnung des Gehäuseabschnitts 4 an den gegenseitigen Stirnseiten 20 der Lagereinheit 1 angeordnet.

**Bezugszeichenliste**

| | |
|---|---|
| 1 | Lagereinheit |
| 2 | Landwirtschaftliches Werkzeug |
| 3 | Landwirtschaftliches Gerät |
| 4 | Gehäuseabschnitt |
| 5 | Hohlwelle |
| 6 | Wälzlager |
| 7 | Schrauben |
| 8 | Leer |
| 9 | Leer |
| 10 | Erster Wellenabschnitt |
| 11 | Zweiter Wellenabschnitt |
| 12 | Dritter Wellenabschnitt |
| 13 | Haltering |
| 14 | Wellendichtring |
| 15 | Deckscheibe |
| 16 | Ausdrehung |
| 17 | Umgebördelter Begrenzungsbereich |
| 18 | Sicherungselement |
| 19 | Umlaufende Nut |
| 20 | Stirnseite |
| 21 | Gewindezapfen |
| D | Drehachse |
| E | Mittelebene |

## Patentansprüche

1. Lagereinheit (1) für landwirtschaftliche Werkzeuge (2),
mit einem Gehäuseabschnitt (4) und einer Hohlwelle (5), welche koaxial zu einer Drehachse (D) angeordnet sind,
mit zwei Wälzlagern (6), welche jeweils einen Außenring aufweisen, wobei die zwei Wälzlager (6) in einem Aufnahmeraum angeordnet und dazu ausgebildet sind, den Gehäuseabschnitt (4) und die Hohlwelle (5) relativ zueinander drehbar um die Drehachse (D) zu lagern,
mit zwei Deckscheiben (15), welche den Aufnahmeraum beidseitig abschließen,
**gekennzeichnet durch**
ein Sicherungselement (18), welches die Außenringe der zwei Wälzlager (6) voneinander beabstandet, wobei das Sicherungselement (18) eine Mittelebene (E) definiert, welche senkrecht zur Drehachse (D) verläuft, und wobei die zwei Deckscheiben (15) als Gleichteile ausgebildet und im gleichen Abstand zu der Mittelebene (E) angeordnet sind.

2. Lagereinheit (1) nach Anspruch 1, **dadurch gekennzeichnet, dass** das Sicherungselement (18) als Sicherungsring ausgebildet ist, wobei der Gehäuseabschnitt (4) in der Mittelebene (E) eine umlaufende Nut (19) umfasst, in der der Sicherungsring zumindest abschnittsweise angeordnet ist.

3. Lagereinheit (1) nach Anspruch 1 oder 2, **dadurch gekennzeichnet, dass** die Wälzlager (6) als Gleichteile ausgebildet und im gleichen Abstand zu der Mittelebene (E) angeordnet sind.

4. Lagereinheit (1) nach einem der vorhergehenden Ansprüche, **dadurch gekennzeichnet, dass** die Lagereinheit (1) zwei Dichtungen (14) aufweist, welche jeweils in axialer Richtung zwischen einer der zwei Deckscheiben (15) und dem benachbarten Wälzlager (6) angeordnet sind, wobei die Dichtungen (14) als Gleichteile ausgebildet und im gleichen Abstand zur Mittelebene (E) angeordnet sind.

5. Lagereinheit (1) nach einem der vorhergehenden Ansprüche, **dadurch gekennzeichnet, dass** der Gehäuseabschnitt (4) um 180° umkehrbar zur Längserstreckung der Drehachse (D) montierbar ist.

6. Lagereinheit (1) nach einem der vorhergehenden Ansprüche, **dadurch gekennzeichnet, dass** die Hohlwelle (5) drei Wellenabschnitte (10, 11, 12) aufweist, wobei der erste Wellenabschnitt (10) einen größeren Durchmesser als der zweite Wellenabschnitt (11) und der zweite Wellenabschnitt (11) einen größeren Durchmesser als der dritte Wellenabschnitt (12) aufweist, wobei der erste Wellenabschnitt (10) als Auflagefläche für eine der zwei Deckscheiben (15), der zweite Wellenabschnitt (11) als Auflagefläche für jeweils einen Innenring der Wälzlager (6) und der dritte Wellenabschnitt (12) als Auflagefläche für einen Haltering (13) ausgebildet ist, wobei der Haltering (13) als Auflagefläche für die zweite der zwei Deckscheiben (15) ausgebildet ist.

7. Lagereinheit (1) nach Anspruch 6, **dadurch gekennzeichnet, dass** der zweite Wellenabschnitt (11) einen umgebördelten Bereich aufweist, welcher die zwei Wälzlager (6) vorspannt.

8. Lagereinheit (1) nach einem der vorhergehenden Ansprüche, **dadurch gekennzeichnet, dass** der Gehäuseabschnitt (4) in zwei stirnseitigen Endabschnitten Ausnehmungen (16) aufweist, welche koaxial zur Hohlwelle (5) und parallel zur Drehachse (D) verlaufen, wobei die Deckscheiben (15) zumindest abschnittsweise parallel zu den Ausnehmungen (16) verlaufen.

9. Anordnung mit einem landwirtschaftlichen Werkzeug (2) und mit einer Lagereinheit (1) nach einem der vorhergehenden Ansprüche 1 bis 8.

10. Anordnung nach Anspruch 9, **dadurch gekennzeichnet, dass** das landwirtschaftliche Werkzeug (2) mit dem Gehäuseabschnitt (4) oder mit der Hohlwelle (5) fest verbunden ist.
